# EUROPEAN PATENT APPLICATION

(11) **EP 4 481 650 A1**
(43) Date of publication of application: **25.12.2024**
(21) Application number: 23174281.8
(22) Date of filing: 19.05.2023
(51) Int. Cl.: G06Q 10/0836, A47G 29/14, G07F 17/12

(54) **A PARCEL LOCKER COMPRISING AN AUTONOMOUS PIN PAD UNIT, AND A METHOD FOR SERVER-SIDE PAIRING OF A PARCEL LOCKER AND AN AUTONOMOUS PIN PAD UNIT, AND A METHOD FOR OPENING A COMPARTMENT DOOR OF A COMPARTMENT USING A PIN PAD**

(71) Applicant: SwipBox Development ApS, 6400 Sønderborg (DK)
(72) Inventor: Kaczmarek, Allan, 6400 Sønderborg (DK)
(74) Representative: Patrade A/S

(57) **Abstract**

An autonomous pin pad unit (200) comprising
- a pin pad (210) for receiving a user pin code;
- a pin pad energy storage (220) for powering the pin pad unit (200);
- a pin pad communication unit (240) including a short-range pin pad communication unit (242) for communicating with the parcel locker (110), and a long-range pin pad communication unit (244) for communicating with a distribution server (300);
- a pin pad controller (230) comprising at least one pin pad processor and at least one pin pad memory including program code, one or more pin codes and one or more electronic tokens linked to the one or more pin codes, wherein the memory and the program code is configured to cause the processor to match a received user pin code with the one or more pin codes and cause the short-range pin pad communication unit (242) to send the linked electronic token to the short-range parcel communication unit (132) as a function of a positive match.

## Description

### Field of the Invention

The present invention relates to a method for server-side pairing of a parcel locker and an autonomous pin pad unit such that the autonomous pin pad unit can be used in combination with a parcel locker or service point comprising one, two or more parcel lockers.

### Background of the Invention

Present day, the fleet of parcel lockers can be divided into two groups. The first group of parcel lockers are hard-wired to an electric source and can thus use long range wireless communication or wired communication to communicate directly with a distribution server. The first group of parcel lockers will typically be operated by a person by using a pin pad or touch screen or by scanning a QR code. The second group of parcel lockers are off-grid and powered by a local power source such as a battery pack. The second group of parcel lockers does not include long range communication and cannot communicate with a distribution server directly. The lack of long-range communication makes the second group of parcel lockers dependent on third-party devices for communicating with the distribution server. In many embodiments, the third-party device is required to have a specific app for ensuring secure communication. This will exclude some users from using the second group of parcel lockers if the users do not have a third-party device, which can install the app or if the users do not wish to install the app.

Thus, there is a need for improving the second group of parcel lockers, such that said parcel lockers can be used and operated by people without a suitable third-party device and/or persons who do not want to install an app. This second group of parcel lockers is also called lean parcel lockers. Examples of the second group of parcel lockers are described in WO2019161870 or WO2019161872.

Furthermore, a person cannot place a package in the present day second group of parcel lockers without using a third-party device with an app for communicating with the parcel lockers. Thus, there is a need for an improvement of the second group of parcel lockers such that any person can place a package in a compartment of the parcel locker which then can be collected by a courier or by any other third party. This will allow people without a suitable third-party device to send packages using the parcel locker, and/or allow persons who do not want to install an app to send packages using the parcel locker.

### Object of the Invention

It is in an object of the invention to provide a method for server-side pairing a parcel locker with an autonomous pin pad unit such that said parcel locker becomes controllable using the autonomous pin pad unit, because this method will enable any known parcel locker belonging to the second group of parcel lockers to be upgraded at a factory or in-field.

It is an object of the invention to provide a parcel locker for distribution of items with an autonomous pin pad unit including a method for opening a compartment door of a compartment using a pin pad. The parcel locker may be a single parcel locker or form part of a service point comprising one, two or more parcel lockers, one of which comprises an autonomous pin pad unit.

### Description of the Invention

An object of the invention by a method for server-side pairing of a parcel locker and an autonomous pin pad unit, wherein the parcel locker comprises a plurality of compartments including compartment doors with lock units for controlling access to the plurality of compartments, and a parcel control unit including a short-range parcel communication unit. The parcel control unit is configured to control the lock unit as a function of instructions received via the short-range parcel communication unit. The method comprises steps of
- attaching an autonomous pin pad unit to the parcel locker, wherein the autonomous pin pad unit comprising
   a pin pad, a pin pad energy storage, a pin pad controller, and a pin pad communication unit including
   a short-range pin pad communication unit and a long-range pin pad
   communication unit for communicating with a distribution server,
- server-side pairing of the autonomous pin pad unit and the parcel locker by
   - exchanging encryption keys with a distribution server and
   - linking the autonomous pin pad unit to the parcel locker at the distribution server by updating a server database or by sending a service point ID linked to the parcel locker to the autonomous pin pad unit.

Thereby, a method is provided for equipping any lean parcel locker such as the parcel lockers described in WO2019161870 or WO2019161872 with an anonymous pin pad unit such that any person can open a compartment door with the pin pad. The pin pad unit is equipped with the short-range pin pad communication unit such that the pin pad unit can communicate with the parcel locker via a suitable short-range communication protocol which can be Bluetooth, or Zigbee, or preferred Bluetooth low-energy (BLE). Thereby, the autonomous pin pad unit is in effect acting as a smartphone with a suitable short-range communication unit and therefore the installation of the autonomous pin pad unit requires no modifications of the parcel locker with the exempt of attaching the autonomous pin pad unit. In theory, the autonomous pin pad unit could be attached to a wall or a pillar or pylon or a neighbouring parcel locker adjacent to or near the parcel locker and it would still be possible to use the autonomous pin pad unit to control the parcel locker.

The step of attaching can be performed by using magnetic force, screws, and/or adhesive for attaching the autonomous pin pad unit to the parcel locker. The step of attaching can be performed at a parcel locker factory, however, the step of attaching could be performed in-field on a parcel locker positioned at any location. It is expected that the method can be performed by a skilled person in about 10-20 minutes when performing the method on a in-field parcel locker. The speed of installation is very important if the autonomous pin pad unit is to be retrofitted on a thousand parcel lockers or more. The speed of installation is in part made this fast by the autonomous pin pad unit being autonomous since it is not required to electronically hardwire the autonomous pin pad unit with the parcel control unit via a suitable cord. The speed of installation is achieved by the autonomous pin pad unit including the pin pad, the pin pad energy storage, the pin pad controller, and the pin pad communication unit as there is no need to hardwire with the controller of the parcel locker.

The server-side pairing of the autonomous pin pad unit to the parcel locker is performed by the autonomous pin pad unit exchanging encryption keys with a distribution server by communicating directly via the long-range pin pad communication unit or via the short-range pin pad communication unit through a third-party device. Thereby, the autonomous pin pad unit and the distribution server are able to establish an encrypted communication and this will allow the autonomous pin pad unit to receive pin codes without the pin codes being readable to a third-party.

There may be a step of linking the autonomous pin pad unit to the parcel locker at the distribution server. The distribution server will have a server database including data that the autonomous pin pad unit with a pin pad ID is in short-range communication distance with the parcel locker having parcel locker ID at a service point with service point ID, thus the distribution server can send a pin code including ab electronic token to autonomous pin pad unit as the pin pad unit will be able to communicate with parcel locker having parcel locker IDs. The database may include one, two or more parcel lockers with different parcel locker ID's at said service point ID that are in short-range communication distance with the autonomous pin pad unit with the pin pad ID. Alternatively, the autonomous pin pad unit may receive the service point ID linked to the parcel locker, wherein the autonomous pin pad unit will include said service point ID in any communication with the distribution server. Both alternatives may be performed without any negative effect.

The parcel locker may be controllable by receiving encrypted tokens as described in WO2019161870 or WO2019161872 or by similar encrypted means. The autonomous pin pad unit may receive such an encrypted token from the distribution server via the long-range pin pad communication unit and said encrypted token will, following a correct user pin code, cause the autonomous pin pad unit to send said encrypted token to the parcel control unit via the short-range pin pad communication unit, and the encrypted token will cause the parcel locker to unlock one or more compartment doors. Thereby allowing one or more parcels to be collected from and/or positioned in the parcel locker. The encrypted tokens for the parcel locker may be encrypted using a public encryption key that is unique for the parcel locker and thus the autonomous pin pad unit will not be able to decrypt the encrypted tokens for the parcel locker. Thus, even if a person in bad faith removes the autonomous pin pad unit, then the person in bad faith will not be able to access the parcel locker.

The long-range pin pad communication unit may communication using GSM communication protocol or similar suitable long-range communication protocol. The long-range pin pad communication unit may comprise a NB-IOT unit.

In an embodiment, the method may be performed on an in-field parcel locker.

The in-field parcel locker is retrofitted at the service point location with an autonomous pin pad unit. Thereby, the method enables a fleet of lean lockers to be upgraded with the autonomous pin pad unit.

In an embodiment, the step of server-side pairing may include linking the autonomous pin pad unit to one or more neighbouring parcel lockers positioned near or at the parcel locker with the autonomous pin pad unit. This reduces the number of needed autonomous pin pad units to enable a fleet of parcel lockers to be "pin pad"-controllable. In many cases, two or more parcel lockers are positioned side by side as shown in one of the figures or at least positioned so close to each other that the neighbouring parcel lockers are within the reach of a short-range communication protocol such as Bluetooth low energy. The two or more parcel lockers form a service point. It is only necessary to equip one of the parcel lockers with the autonomous pin pad unit since the autonomous pin pad unit is linked to all the parcel lockers at the service point. The linking can be performed for the two or more parcel lockers in the same way as for a single parcel locker as described earlier.

This also reduces any potential confusion at the service point as the user can only press a user pin code into one pin pad. Since the autonomous pin pad unit can communicate with the parcel lockers via the short-range pin pad communication unit with the parcel lockers, then it is possible to send electronic tokens and thereby instructions to all parcel lockers.

At the service point the autonomous pin pad unit could be attached to a wall or pylon or something similar instead of one of the parcel lockers, however this would increase the complexity since one would be required to set up a pylon or request a right for attaching the autonomous pin pad unit to a wall.

In an embodiment, the method may include steps of
- opening a compartment door of a compartment of the plurality of compartments;
- creating at least one aperture in said compartment door; and the step of attaching is performed by attaching the autonomous pin pad unit to said compartment door using the at least one aperture.

This again enables fast in-field updating of a parcel locker as a maintenance person instructs the parcel locker to open a suitable compartment door followed by creating at least one aperture and then attaching the autonomous pin pad unit. It can be done on any of the compartment doors, and it is expected that the method can be performed in 10 to 20 minutes. The at least one aperture enables easier mechanical connection.

In an embodiment, the autonomous pin pad unit may comprise a first part including at least a pin pad to be attached to the exterior side of the parcel locker and a second part attached to the interior side of the parcel locker, wherein the first part and the second part are at least electronically connected through said at least one aperture.

The interior side is the side of the gate facing the inside of the compartment, while the exterior side is the side facing the ambient atmosphere.

The first part of the autonomous pin pad unit must include the pin pad and preferably one or both antennas of the pin pad communication unit i.e., the antennas of the short-range pin pad communication unit and the long-range pin pad communication unit as this ensures better wireless strength.

All electronics including the pin pad energy storage can be installed in the first part of the autonomous pin pad unit. However, the pin pad energy storage and the pin pad controller are preferably forming part of the second part of the autonomous pin pad unit, in part because the pin pad energy storage can be rather large, and it limits the possibility of tinkering or manipulating the pin pad controller.

The pin pad energy storage may be a suitable battery unit or a hydrogen storage and fuel cell. The pin pad energy storage may have enough energy to power the autonomous pin pad unit for three years, preferably for five years, or more preferably for 10 years.

An object of the invention by a parcel locker for distribution of items, the parcel locker comprises
- a plurality of compartments including compartment doors with lock units for controlling access to the plurality of compartments,
- a short-range parcel communication unit,
- a parcel locker controller comprising at least one processor and at least one locker memory that includes program code, wherein the locker memory and the program code is configured to cause the processor to instruct one or more of the lock units to open as a function of a received electronic token via the short-range controller communication unit;
- an autonomous pin pad unit comprising
   - a pin pad for receiving a user pin code;
   - a pin pad energy storage for powering the pin pad unit;
   - a pin pad communication unit including a short-range pin pad communication unit for communicating with the parcel locker, and a long-range pin pad communication unit for communicating with a distribution server;
   - a pin pad controller comprising at least one pin pad processor and at least one pin pad memory including program code, one or more pin codes and one or more electronic tokens linked to the one or more pin codes, wherein the memory and the program code is configured to cause the processor to match a received user pin code with the one or more pin codes and cause the short-range pin pad communication unit to send the linked electronic token to the short-range parcel communication unit as a function of a positive match.

The parcel locker and the autonomous pin pad unit functions independent of each other, however the parcel locker and the autonomous pin pad unit can communicate with one another. The parcel locker may be a parcel locker as described in WO2019161870 or WO2019161872, wherein communication with the parcel locker is achieved via the short-range controller communication unit. The communication will in almost all cases be encrypted, and thus electronic token(s) is/are sent to the parcel locker which electronic token(s) contain(s) instructions for the parcel locker controller.

The autonomous pin pad unit is designed to communicate with the parcel locker using a short-range communication protocol such as Bluetooth or Bluetooth low-energy (BLE). Other protocols can be used. This eliminates the need for hardwiring the autonomous pin pad unit and the parcel locker controller, which makes installation faster and enables retrofitting. Furthermore, the hardwire would be a potential security risk. Furthermore, the autonomous pin pad unit enables control of neighboring parcel lockers as the autonomous pin pad unit can communicate similar to a smart phone with an app.

A recipient of a package stored in the parcel locker according to the invention may receive a user code by SMS or by e-mail or by any other means. The autonomous pin pad unit may be configured to regularly contact the distribution server for receiving pin codes and the electronic tokens linked to the pin codes. Communication with the distribution server is established using the long-range pin pad communication unit. The pin codes and the electronic tokens are stored on the pin pad memory and typically the data is stored in encrypted form.

The autonomous pin pad unit may be configured to contact the distribution server once per day, or twice a day, or once every weekday, and none during the weekend, or any suitable schedule. Every communication session with the distribution server uses energy thus it should be limited as much as possible.

The user will at the parcel locker input the received user code using the pin pad. The pin pad controller will compare the user code with the stored pin codes and in case of a match then communicate the electronic token linked to the pin code, using the short-range pin pad communication unit, to the short-range locker communication unit which causes the parcel locker to unlock the compartment door such that the user can collect the package.

In the case, where the user code inputted through the pin pad does not match a pin code stored on the autonomous pin pad unit, then the pin pad controller may be configured to cause the long-range pin pad communication unit to communicate with the distribution server to update the stored list of pin codes and electronic tokens linked to the pin codes. The autonomous pin pad will afterwards compare the updated list of pin codes with the user code and in case of a match then communicate the electronic token linked to the pin code, using the short-range pin pad communication unit, to the short-range locker communication unit which causes the parcel locker to unlock the compartment door such that the user can collect the package. In the cases where there is no match between the user code and the list of pin codes, then the autonomous pin pad will do nothing and optionally go into a hibernation mode wherein no user code can be inputted through the pin pad to limit a person inputting several user codes in bad faith.

The autonomous pin pad unit may include an illumination unit to communicate with user by displaying a green color or red color as a function of a matching pin code or non-matching pin code.

The pin pad controller may have a table as shown below stored on the at least one pin pad memory.

| **Pin code** | **Electronic token** | **Parcel locker ID** |
|---|---|---|
| 111111111 | Token #1 | 54348 |
| 222222222 | Token #2 | 54348 |
| 333333333 | Token #3 | 54348 |
| 444444444 | Token #4 | 54351 |
| ... | ... | ... |
| i i i i i i i i | Token #i | #X |

The numbers are chosen at random and are non-limiting. For this table, the input of a digit 8 times will cause the autonomous pin pad unit to communicate the electronic token in the same row to the parcel locker in the same row. The third column is only required in the cases wherein the autonomous pin pad unit should be able to communicate with two or more parcel lockers.

The parcel locker may comprise a first energy storage for powering the parcel locker or be hardwired to power.

The pin pad energy storage may be a suitable battery unit or a hydrogen storage and fuel cell. The pin pad energy storage may have enough energy to power the autonomous pin pad unit for three years, preferably for five years, or more preferably for 10 years.

In an embodiment, the memory and the program code may further be configured to cause the long-range pin pad communication unit to communicate with a distribution server to update the one or more pin codes and the one or more electronic tokens as a function of pre-set period or when receiving a non-matching user pin code. This enables the autonomous pin pad unit to be autonomous as no party has to send instructions to the pin pad unit.

In an embodiment, the pin pad unit may comprise
- a first part including at least a pin pad to be attached to an exterior side of one compartment door of the compartment doors; and
- a second part attached to an interior side of said compartment door,
wherein said compartment door comprises at least one aperture and the first part and the second part of the the pin pad unit being at least electronically connected through the at least one aperture. Optionally the first and second part are also mechanically connected through the at least one aperture.

The interior side is the side of the gate facing the inside of the compartment, while the exterior side is the side facing the ambient atmosphere.

All electronics including the pin pad energy storage can be installed in the first part of the autonomous pin pad unit, however the pin pad energy storage and the pin pad controller are preferably forming part of the second part of the autonomous pin pad unit in part because the pin pad energy storage can be rather large, and it limits the possibility of tinkering or manipulating the pin pad controller.

In an embodiment, the short-range pin pad communication unit may comprise a short-range antenna and the long-range pin pad communication unit comprises a long-range antenna, wherein the short-range antenna and the long-range antenna are positioned on the exterior side of the one compartment door of the compartment doorss.

The first part of the autonomous pin pad unit must include the pin pad and preferably one or both antennas of the pin pad communication unit i.e., the antennas of the short-range pin pad communication unit and the long-range pin pad communication unit as this ensures better wireless strength.

An object of the invention by a service point for distribution of items, wherein the service point comprises
- one or more parcel lockers at least controllable via short-range communication, wherein the one or more parcel lockers comprises a plurality of compartments including compartment doors with lock units for controlling access to the plurality of compartments, a parcel control unit, and a short-range parcel communication unit, and
- a parcel locker with an autonomous pin pad unit as previously described, wherein the one or more pin codes and the one or more electronic tokens includes pin codes and electronic tokens to be sent to at least one of the one or more parcel lockers as a function of received user pin codes via short-range wireless communication.

In this embodiment the autonomous pin pad may communicate with any of the parcel lockers forming part of the service point.

The autonomous pin pad unit could be positioned on a separate wall or pylon instead of the parcel locker since all communication is wireless, however, that would require additional service of the service point and that would increase the time needed to set up a parcel locker or to retrofit a parcel locker in-field.

An object of the invention by a method for opening a compartment door of a compartment using a pin pad, the parcel locker comprises a plurality of compartments including compartment doors with lock units for controlling access to the plurality of compartments, a parcel control unit including a short-range parcel communication unit, and an autonomous pin pad unit comprising a pin pad, a pin pad energy storage, a pin pad controller, and a pin pad communication unit including a short-range pin pad communication unit for communicating with the parcel locker, and a long-range pin pad communication unit for communicating with a distribution server, wherein the autonomous pin pad unit performs steps of;
- receiving a user pin code;
- matching the received user pin code with one or more pin codes stored on the autonomous pin pad unit;
- transmitting an electronic token to the short-range parcel communication unit as a function of a matching pin codes, wherein the electronic token will cause the parcel locker to unlock a compartment door;
- receiving an electronic synchronisation token from the short-range parcel communication unit.

Thereby, a recipient of a package can collect a package or item from the parcel locker using a pin code, which the recipient has received in any way possible such as by SMS, by e-mail, or by regular post. It could also be operated by a person sending a package or returning a package, where the package is placed in one of the compartments.

The autonomous pin pad unit can upon receiving the electronic synchronisation token go into a hibernation mode to conserve energy as the autonomous pin pad unit then knows that the compartment has been opened. The synchronisation with the distribution server can be performed by the parcel locker, when the next smart phone connects to the parcel as described in WO2019161870 or WO2019161872 by piggybacking.

In an embodiment, wherein the parcel locker may be as described earlier in the patent application or in any one of claims 6 to 9 or the parcel locker is part of a service point as described in claim 10.

In an embodiment, wherein the autonomous pin pad unit may be performing the following;
- transmitting the user pin code to the distribution server as of a non-matching user pin code,
- receiving an electronic token as a function of the user pin code matching a pin code at the distribution server,
- transmitting the electronic token to the short-range parcel communication unit wherein the electronic token will cause the parcel locker to unlock the compartment door.

The autonomous pin pad unit will in some cases not be updated at the time when a person arrives at the parcel locker or service point to unlock a lock unit in order to get access to a compartment. In the situation, wherein the user pin code inputted through the pin pad does not match a stored pin code, then by performing the steps mentioned above then the autonomous pin pad unit will in case of a match on the distribution server receive the electronic token linked to said pin code matching the user pin code. Thereby, it is ensured that the autonomous pin pad unit is useable at all times.

The step of receiving may include receiving all pin codes not yet received by the autonomous pin pad unit including the electronic tokens linked to the pin codes.

In an embodiment, the autonomous pin pad unit may perform a step of hibernating between steps of receiving a user pin code. The most valuable resource of the autonomous pin pad unit is that energy and hibernating will enable the pin pad unit to save energy. In the hibernation state both the short-range pin pad communication unit and the long-range pin pad communication unit are hibernating, and the short-range pin pad communication unit only wakes up, when the autonomous pin pad unit is communicating with a parcel locker. This is contrary to for example the parcel locker, wherein the short-range parcel communication unit continuously advertises.

In an embodiment, the method may comprise steps of
- transmitting the electronic synchronisation token to the distribution server;
- receiving an electronic acknowledgment token from the distribution server.

These two steps enable the autonomous pin pad unit to server-side synchronization such that the distribution server is updated on the status of a compartment as this will enable the compartment to be assigned a new package or enables the server to inform a receiver that a package can be collected from a compartment. These steps do not need to be performed immediately after receiving the electronic synchronisation token from the parcel locker but can be performed with a delay without affecting the effectiveness of the parcel locker as packages are in many cases assigned to the parcel locker once or twice a day. Thus, if server-side synchronisation is performed before the assignment of packages then it will not affect the effectiveness.

The server-side synchronisation is more important than synchronisation of the parcel locker. It is therefore not required that the autonomous pin pad unit transmits the electronic acknowledgment token to the parcel locker as the parcel locker does not need to be updated to function properly. If the parcel locker receives instructions to open compartment X, then the parcel locker will open compartment X regardless of prior actions at the parcel locker.

In an embodiment, the autonomous pin pad unit may perform a step of validating a user pin code by performing a checksum calculation, and the step of matching is only performed as a function of passing the step of validating. Alternatively, the autonomous pin pad unit only performs a step of communicating with a distribution server to update the one or more pin codes and the one or more electronic tokens as a function of passing the step of validating.

This enables the autonomous pin pad unit to reduce the energy needed to function in day-to-day function. A user may have received a pin code, but during inputting of said pin code the user makes a mistake such that the user code does not match the received pin code and thus does not match a pin code stored on the autonomous pin pad unit. The step of validating prevent the autonomous pin pad unit from perform energy consuming functions when receiving most erroneous inputs.

An object of the invention is achieved by a kit for forming a service point, the kit comprising
- one or more parcel lockers for distribution of items, the one or more parcel lockers comprises
   - a plurality of compartments including compartment doors with lock units for controlling access to the plurality of compartments,
   - a short-range parcel communication unit,
   - a parcel locker controller comprising at least one processor and at least one locker memory that includes program code, wherein the memory and the program code is configured to cause the processor to instruct one or more of the lock units to open as a function of a received electronic token via the short-range parcel communication unit;
- an autonomous pin pad unit comprising
   - a pin pad for receiving a user pin code;
   - a pin pad energy storage for powering the pin pad unit;
   - a pin pad communication unit including a short-range pin pad communication unit for communicating with the parcel locker, and a long-range pin pad communication unit for communicating with a distribution server;
   - a pin pad controller comprising at least one pin pad processor and at least one pin pad memory including program code, one or more pin codes and one or more electronic tokens linked to the one or more pin codes, wherein the memory and the program code is configured to cause the processor to match a received user pin code with the one or more pin codes and cause the short-range pin pad communication unit to send the linked electronic token to the short-range parcel communication unit as a function of a positive match.

Thereby, the kit can be used to install a service point anywhere which can be controlled by at least an autonomous pin pad unit. The pin pad unit does not need to be attached to any one of the parcel lockers however in most cases the autonomous pin pad will be attached to one of the parcel lockers.

### Description of the Drawing

Fig. 1 illustrates an autonomous pin pad unit;
Fig. 2 illustrates an embodiment of a parcel locker with an autonomous pin pad unit;
Fig. 3 illustrates another embodiment of a parcel locker with an autonomous pin pad unit;
Fig. 4 illustrates a service point comprising three parcel lockers wherein an autonomous pin pad unit is attached to one of the three parcel lockers;
Fig. 5 illustrates an embodiment of a parcel locker wherein an autonomous pin pad unit is positioned adjacent to the parcel locker;
Fig. 6 illustrates a method for server-side pairing of a parcel locker to and an autonomous pin pad unit (200); and
Fig. 7 illustrates communication to and from the autonomous pin pad unit.

### Detailed Description of the Invention

| **Item** | **No** |
|---|---|
| Service point | 100 |
| Parcel locker | 110, 110A,110B... 110N |
| Compartment | 120 |
| Compartment door | 122 |
| Parcel control unit | 130 |
| Short-range parcel communication unit | 132 |
| | |
| Autonomous pin pad unit | 200 |
| Pin pad | 210 |
| Pin pad energy storage | 220 |
| Pin pad controller | 230 |
| Pin pad processor | 232 |
| Pin pad memory | 234 |
| Pin pad communication unit | 240 |
| Short-range pin pad communication unit | 242 |
| Short-range antenna | 243 |
| Long-range pin pad communication unit | 244 |
| Long-range antenna | 245 |
| Distribution server | 300 |
| | |
| Method for server-side pairing a parcel locker with an autonomous pin pad unit | 1000 |
| Attaching | 1100 |
| Server-side pairing | 1200 |
| Exchanging | 1210 |
| Linking | 1220 |
| Sending | 1230 |
| Opening | 1300 |
| Creating | 1400 |
| | |
| A method for opening a compartment door of a compartment using a pin pad | 2000 |
| Receiving | 2100 |
| Validating | 2150 |
| Matching | 2200 |
| Transmitting | 2300 |
| Receiving | 2400 |
| Hibernating | 2500 |
| | |

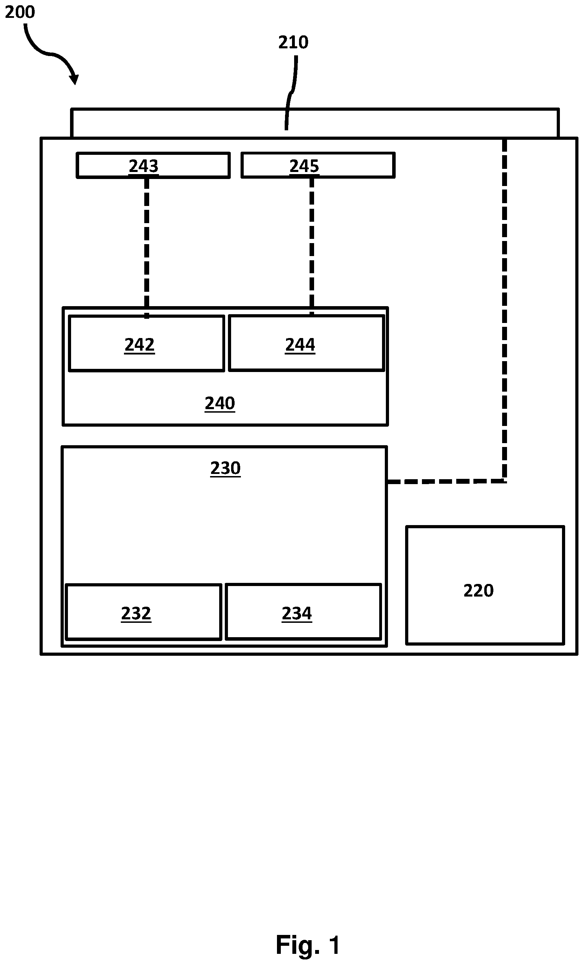

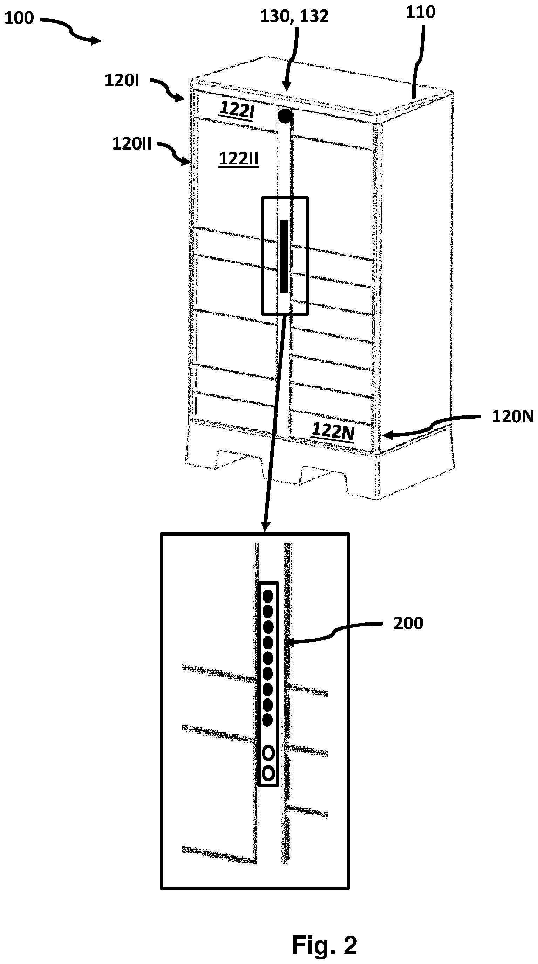

Fig. 1 illustrates an autonomous pin pad unit 200. The autonomous pin pad unit 200 comprises a pin pad 210 for receiving a user pin code. In this application, user pin code is the pin code inputted by a user through the pin pad 210. The pin pad 210 must be placed accessible for the user. Figures 2 to 5 provide a non-exhaustive list of examples of how the pin pad 210 can be placed.

The autonomous pin pad unit 200 further comprises a pin pad energy storage 220 for powering the pin pad unit 200. The pin pad energy storage 220 may be a battery cell or a hydrogen storage and a fuel cell. The battery cell may comprise primary batteries such as a wet-type battery, preferably Li-SoCl2 batteries, or manganese batteries, or iron disulfate (LiFeS2) batteries, lithium manganese dioxide (LiMnO2) batteries, or lithium metal-oxide batteries, or high impedance batteries. Li-SoCl2 batteries has a very low self-discharge rate and can provide energy for five, ten or more years. The power connection from the pin pad energy storage 220 is not shown but the pin pad energy storage 220 powers the components of the autonomous pin pad unit 200.

The autonomous pin pad unit 200 further comprises a pin pad communication unit 240 including a short-range pin pad communication unit 242 for communicating with the parcel locker 110, and a long-range pin pad communication unit 244 for communicating with a distribution server 300. The short-range pin pad communication unit 242 may be Bluetooth or Bluetooth Low-Energy (BLE) or a similar wireless protocol. The long-range pin pad communication unit 244 may be a GSM unit or NB-IOT unit or a similar long-range wireless protocol.

The short-range pin pad communication unit 242 and the long-range pin pad communication unit 244 have respectively a short-range antenna 243 and a long-range antenna 245. Both antennas 243, 245 should be positioned to achieve the best possible communication strength. The antennas 243, 245 are, when the autonomous pin pad unit 200 is attached to a parcel locker 110, preferably positioned on an exterior side of the parcel locker 110. The parcel locker 110 is typically made of a metal and this will in many cases reduce the communication strength if the antennas 243,245 are positioned on the inside the parcel locker 110. The short-range antenna 243 can be placed inside the parcel locker 110 while achieving sufficient communication strength to communicate with a parcel locker 110.

The autonomous pin pad unit 200 further comprises a pin pad controller 230 comprising at least one pin pad processor 232 and at least one pin pad memory 234 including program code, one or more pin codes and one or more electronic tokens linked to the one or more pin codes. The pin pad memory 234 and the program code is configured to cause the processor to match a received user pin code with the one or more pin codes and cause the short-range pin pad communication unit 242 to send the linked electronic token to the short-range parcel communication unit 132 as a function of a positive match.

Fig. 2 illustrates an embodiment of a parcel locker 110 with an autonomous pin pad unit. The parcel locker 110 is a service point 100. The parcel locker 110 is for distribution of items. The parcel locker 110 may be a lean locker being powered by a first energy storage such as a battery cell or battery cells. The parcel locker 110 can be hard-wired to a power source.

The parcel locker 110 comprises a plurality of compartments 20 including compartment doors 22 with lock units for controlling access to the plurality of compartments 120. The compartments may have various shapes and sizes. The plurality of compartments 120 are typically positioned in racks forming one or more columns of compartments 120.

The parcel locker 110 comprises a short-range parcel communication unit 132 such as Bluetooth or Bluetooth Low-Energy (BLE) or a similar wireless protocol. The short-range parcel communication unit 132 is illustrated by a black circle, however the short-range parcel communication unit 132 could be placed at a different location of the parcel locker. The parcel locker 110 comprises a parcel locker controller 130 comprising at least one processor and at least one locker memory that includes program code, wherein the locker memory and the program code is configured to cause the processor to instruct one or more of the lock units to open as a function of a received electronic token via the short-range parcel communication unit 132.

The autonomous pin pad unit 200 has the features as described in figure 1, however only the pin pad 210 is shown. The pin pad 210 is in this specific embodiment positioned between two different columns of compartments 120. A close-up of the pin pad 210 is shown, however the shape and/or the number of buttons can be different. The other components of the autonomous pin pad unit 200 can be positioned on an exterior side of the parcel locker 110. However, in most cases, all components except the pin pad 210 and the antennas 243, 245 are positioned inside the parcel locker 110 to protect from wear and tear or from a person trying to force entry into the autonomous pin pad unit 200.

It is important that the short-range pin pad communication unit 242 and the short-range parcel communication unit 132 are compatible such that said units 242, 132 can communicate and exchange tokens.

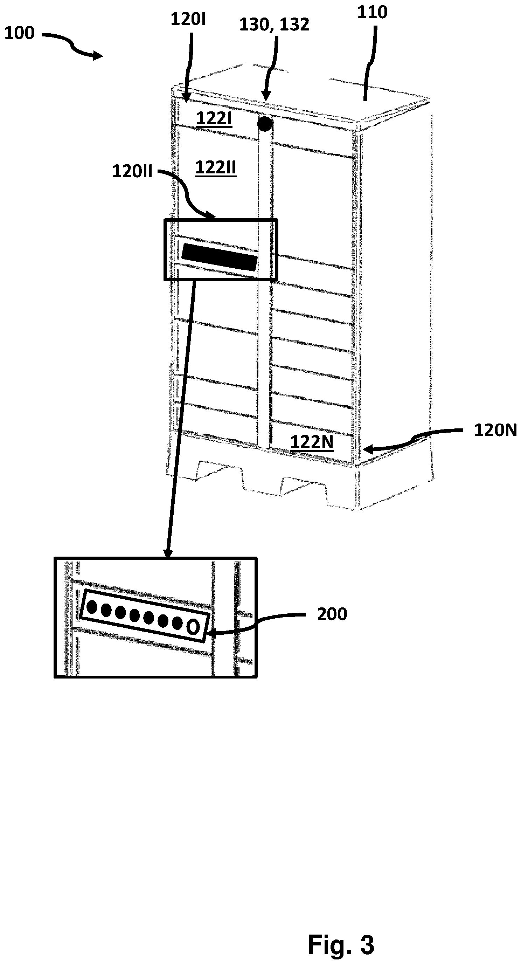

Fig. 3 illustrates another embodiment of a parcel locker 110 with an autonomous pin pad unit 200.

The parcel locker 110 is a service point 100. The parcel locker 110 is for distribution of items. The parcel locker 110 may be a lean locker being powered by a first energy storage such as a battery cell or battery cells. The parcel locker 110 can be hardwired to a power source.

The parcel locker 110 comprises a plurality of compartments 20 including compartment doors 22 with lock units for controlling access to the plurality of compartments 120. The compartments may have various shapes and sizes. The plurality of compartments 120 are typically positioned in racks forming one or more columns of compartments 120.

The parcel locker 110 comprises a short-range parcel communication unit 132 such as Bluetooth or Bluetooth Low-Energy (BLE) or a similar wireless protocol. The short-range parcel communication unit 132 is illustrated by black circle, however the short-range parcel communication unit 132 could be placed at a different location of the parcel locker. The parcel locker 110 comprises a parcel locker controller 130 comprising at least one processor and at least one locker memory that includes program code, wherein the locker memory and the program code is configured to cause the processor to instruct one or more of the lock units to open as a function of a received electronic token via the short-range parcel communication unit 132.

The autonomous pin pad unit 200 has the features as described in figure 1, however only the pin pad 210 is shown. The pin pad 210 is in this specific embodiment positioned on the compartment door 122. A close-up of the pin pad 210 is shown, however the shape and/or the number of buttons can be different. The other components of the autonomous pin pad unit 200 can be positioned on an exterior side of the parcel locker 110. However, in most cases, all components except the pin pad 210 and the antennas 243, 245 are positioned inside the parcel locker 110 to protect from wear and tear or from a person trying to force entry into the autonomous pin pad unit 200.

It is important that the short-range pin pad communication unit 242 and the short-range parcel communication unit 132 are compatible such that said units 242, 132 can communicate and exchange tokens.

In this embodiment, the autonomous pin pad unit 200 may be assembled of a first part including at least a pin pad 210 to be attached to the exterior side of the parcel locker 110 and a second part attached to the interior side of the parcel locker 110, wherein the first part and the second part are at least electronically connected through said at least one aperture. The at least one aperture is formed in one of the compartment doors 122 and it enables a maintenance person to fast and efficiently perform the method for server-side pairing of the parcel locker 110 and the autonomous pin pad unit 200. Due to the design, the method is able to be performed on an in-field parcel locker 100. Thus, parcel lockers 110 can be retrofitted with the autonomous pin pad unit 200.

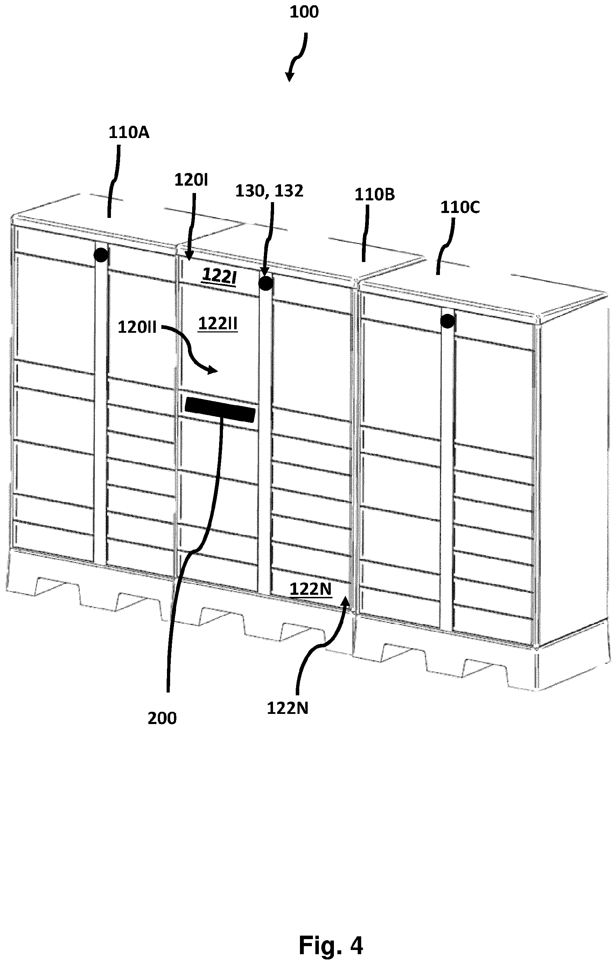

Fig. 4 illustrates a service point 100 comprising three parcel lockers 110A, 110B, 110C wherein an autonomous pin pad unit 200 is attached to one of the three parcel lockers 110B. The two parcel lockers 110A, 110C can be any standard parcel locker 110 such as the parcel lockers shown in figure 2, or figure 3, or figure 5, but without the autonomous pin pad unit 200.

The middle parcel locker 110B is equipped with an autonomous pin pad unit 200. Thus, the middle parcel locker 110B can be similar or identical to the embodiment disclosed in figure 2 or figure 3. The autonomous pin pad unit 200 has the same features as described for figure 1.

The autonomous pin pad unit 200 is only attached to the middle parcel locker 110B, but the short-range pin pad communication unit 242 enables communication with the other adjacent parcel lockers 110A, 110C, such that user pin codes inputted through the pin pad 210 can cause the pin pad 210 to communicate and send one or more electronic tokens to the any of the parcel lockers 110A, 110B, 110C forming part of the service point 100.

The autonomous pin pad unit 200 can be attached to any of the three parcel lockers 110A, 110B, 110C.

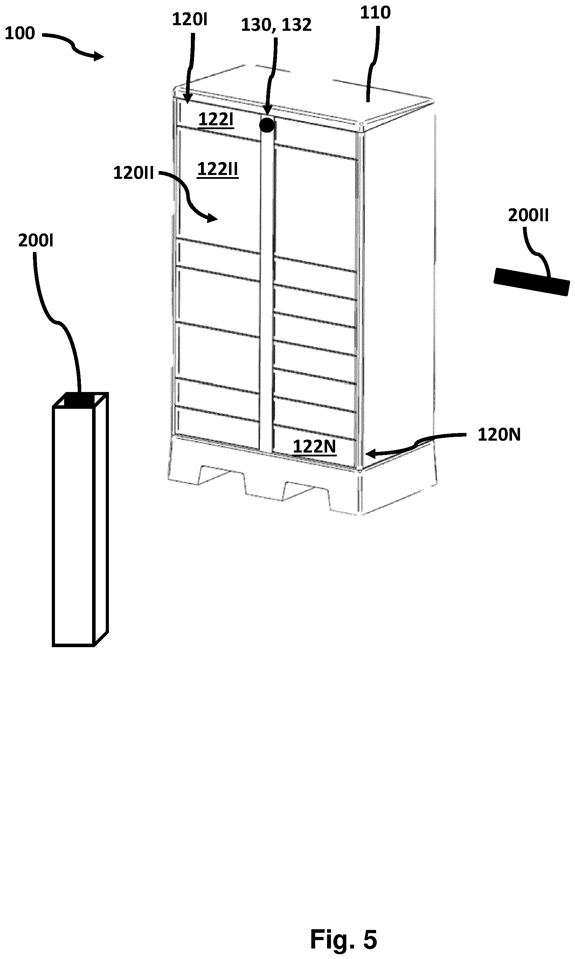

Fig. 5 illustrates an embodiment of a parcel locker 110, wherein two autonomous pin pad units 200I, 200II are positioned adjacent to the parcel locker 110. The parcel locker 110 and the autonomous pin pad unit 200 can have the features described in figures 1 to 4.

The figure illustrates that one of the two autonomous pin pad units 200I can be attached on a pylon next to the parcel locker 110. This works completely similar to the autonomous pin pad unit 200 being attached to a neighbouring parcel locker 110 as shown in figure 4.

The figure also illustrates that the other of the two autonomous pin pad units 200II can be attached to a wall adjacent to the parcel locker 110. This works completely similar to the autonomous pin pad unit 200 being attached to a neighbouring parcel locker 110 as shown in figure 4.

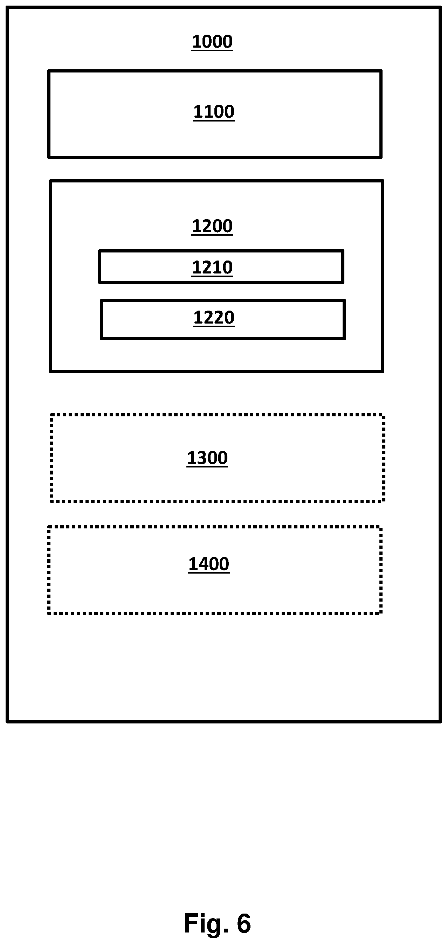

Fig. 6 illustrates a method 1000 for server-side pairing of a parcel locker 100 and an autonomous pin pad unit 200. The parcel locker 110 comprises a plurality of compartments 120 including compartment doors 122 with lock units for controlling access to the plurality of compartments 120, and a parcel control unit 130 including a short-range parcel communication unit 132, wherein the parcel control unit 130 is configured to control the lock unit as a function of instructions received via the short-range parcel communication unit 132.

The method 1000 comprises a step of attaching 1100 an autonomous pin pad unit 200 to the parcel locker 110, wherein the autonomous pin pad unit 200 comprises a pin pad 210, a pin pad energy storage 220, a pin pad controller 230, and a pin pad communication unit 240. The pin pad communication unit 240 includes a short-range pin pad communication unit 242 and a long-range pin pad communication unit 242 for communicating with a distribution server. An example of the autonomous pin pad unit 200 is described in figure 1. The step of attaching can be performed by screwing, interlocking, using an adhesive or by similar means.

The method 1000 comprises a server-side pairing 1200 of the autonomous pin pad unit 200 and the parcel locker 110 by
- exchanging 1210 encryption keys with a distribution server 300; and
- linking 1220 the autonomous pin pad unit 200 to the parcel locker 110 at the distribution server 300 by updating a server database and/or by sending 1230 a service point ID linked to the parcel locker 110 to the autonomous pin pad unit 200.

The exchanging of encryption keys enables the distribution server 300 and the autonomous pin pad unit 200 to have a secure encrypted communication. The exchanging can be performed by the person attaching the autonomous pin pad unit 200 using a smart device with a suitable app for the exchange. However, the exchange could also be via the long-range pin pad communication unit, or the exchange could be performed by other means.

In the second step of the server-side pairing 1200 is performed by a step of linking 1220 such that the autonomous pin pad unit 200 is aware of the service point ID linked to the parcel locker such that the autonomous pin pad unit 200 can provide said service point ID to the distribution server 300 during any communication and/or the distribution server 300 has a table linking the pin pad unit ID to the service point. The two solutions are equivalent.

The step of server-side pairing 1200 includes linking 1220 the autonomous pin pad unit 200 to one or more neighbouring parcel lockers 110A,110B... 110N positioned near or adjacent to the parcel locker 110 with the autonomous pin pad unit 200. This can be added to the table on the distribution server 300 or by the autonomous pin pad unit 200 sending the service point ID, which will be the same for all the parcel lockers 110. This ensures that only one of the parcel lockers 110A, 110B... 110N at a service point 100 must be equipped with an autonomous pin pad unit 200. This reduces the number of autonomous pin pad units 200 needed for a parcel locker fleet.

In an embodiment, the method 1000 may include steps of
- opening 1300 a compartment door 122 of a compartment of the plurality of compartments 120.
- creating 1400 at least one aperture in said compartment door 122; and the step of attaching 1100 is performed by attaching 1100 the autonomous pin pad unit 200 to said compartment door 122 using the at least one aperture.

Thereby, the the autonomous pin pad unit 200 can be attached to an in-field parcel locker 110, such that the parcel locker fleet can be retrofitted.

The autonomous pin pad unit 200 may comprise a first part including at least a pin pad 210 to be attached to the exterior side of the parcel locker 110 and a second part attached to the interior side of the parcel locker 110. The first part and the second part of the autonomous pin pad unit 200 are at least electronically connected through said at least one aperture.

The first part and the second part of the autonomous pin pad unit 200 may be connected using screws extending through the one or more apertures.

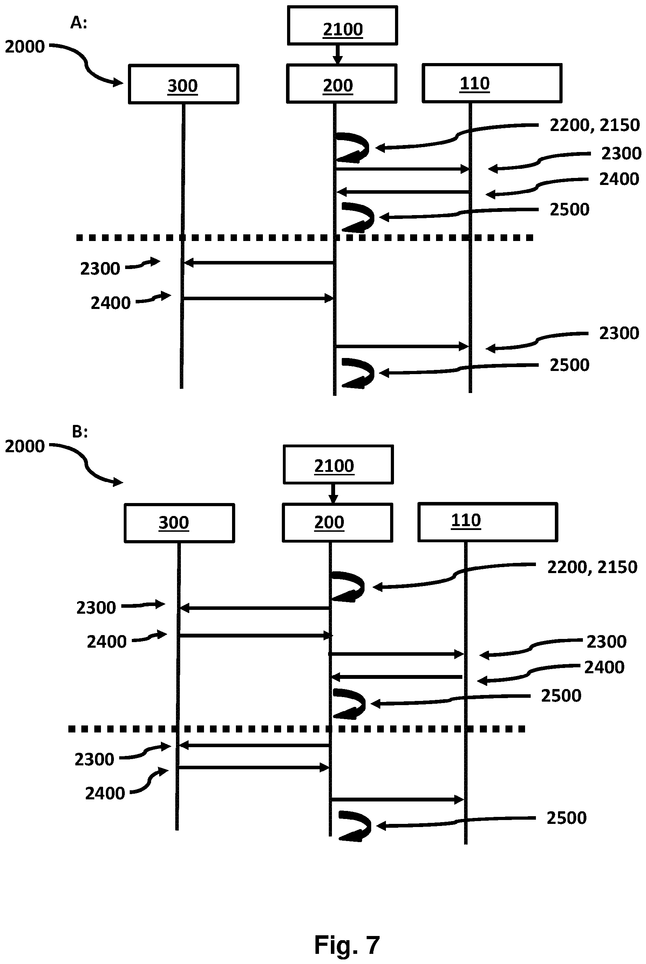

Fig. 7 illustrates communication to and from the autonomous pin pad unit. Figure 7A illustrates an embodiment wherein a user pin code is inputted through the pin pad 210 wherein the user pin code does match a pin code stored on the autonomous pin pad unit 200. Figure 7B illustrates an embodiment wherein a user pin code is inputted through the pin pad 210 wherein the user pin code does not match a pin code stored on the autonomous pin pad unit 200, but there is a matching pin code stored on a distribution server 300.

Thus, figure 7 illustrates the method 2000 for opening a compartment door of a compartment 122 using a pin pad 210. The parcel locker 110 comprises a plurality of compartments 120 including compartment doors 122 with lock units for controlling access to the plurality of compartments 122, a parcel control unit 130 including a short-range parcel communication unit 132, and an autonomous pin pad unit 200. The autonomous pin pad unit 200 comprises a pin pad 210, a pin pad energy storage 220, a pin pad controller 230, and a pin pad communication unit 240 including a short-range pin pad communication unit 242 for communicating with the parcel locker 210, and a long-range pin pad communication unit 242 for communicating with a distribution server 300.

The autonomous pin pad unit 242 performs steps of;
- receiving 2100 a user pin code;
- matching 2200 the received user pin code with one or more pin codes stored on the autonomous pin pad unit 200;
- transmitting 2300 an electronic token to the short-range parcel communication unit 132 as a function of a matching pin codes, wherein the electronic token will cause the parcel locker 110 to unlock a compartment door 122;
- receiving 2400 an electronic synchronisation token from the short-range parcel communication unit 132.

Figure 7b discloses that the autonomous pin pad unit 200 performs the following steps of
- transmitting 2300 the user pin code to the distribution server 300 as of a non-matching user pin code,
- receiving 2400 an electronic token as a function of the user pin code matching a pin code at the distribution server 300,
- transmitting 2300 the electronic token to the short-range parcel communication unit 132 wherein the electronic token will cause the parcel locker 110 to unlock the compartment door.

In both figures 7A and 7B, the autonomous pin pad unit 200 performs a step of hibernating 2500 between steps of receiving 2400 a user pin code. Thereby, the autonomous pin pad unit 200 saves energy.

In both figures 7A and 7B, the method 2000 may comprise steps of
- transmitting 2300 the electronic synchronization token to the distribution server 300.
- receiving 2400 an electronic acknowledgment token from the distribution server 300.

## Claims

1. A method (1000) for server-side pairing of a parcel locker (110) and an autonomous pin pad unit (200), wherein the parcel locker (110) comprises a plurality of compartments (120) including compartment doors (122) with lock units for controlling access to the plurality of compartments (120), and a parcel control unit (130) including a short-range parcel communication unit (132), wherein the parcel control unit (130) is configured to control the lock unit as a function of instructions received via the short-range parcel communication unit (132), wherein the method (1000) comprises steps of
- attaching (1100) an autonomous pin pad unit (200) to the parcel locker (110), wherein the autonomous pin pad unit (200) comprising
a pin pad (210), a pin pad energy storage (220), a pin pad controller (230), and a pin pad communication unit (240) including
a short-range pin pad communication unit (242) and a long-range pin pad communication unit (242) for communicating with a distribution server (300),
- server-side pairing (1200) of the autonomous pin pad unit (200) and the parcel locker (110) by
- exchanging (1210) encryption keys with a distribution server (300) and
- linking (1220) the autonomous pin pad unit (200) to the parcel locker (110) at the distribution server (300) by updating a server database and/or by sending (1230) a service point ID linked to the parcel locker (110) to the autonomous pin pad unit (200).

2. A method (1000) according to claim 1, wherein the method (1000) is performed on an in-field parcel locker (110).

3. A method (1000) according to claim 1 or 2, wherein the step of server-side pairing (1200) includes linking (1220) the autonomous pin pad unit (200) to one or more neighbouring parcel lockers (110A,110B... 110N) positioned near or adjacent to the parcel locker (110) with the autonomous pin pad unit (200).

4. A method (1000) according to any one of claims 1-3, wherein the method (1000) includes steps of
- opening (1300) a compartment door (122) of a compartment of the plurality of compartments (120);
- creating (1400) at least one aperture in said compartment door (122); and
the step of attaching (1100) is performed by attaching (1100) the autonomous pin pad unit (200) to said compartment door (122) using the at least one aperture.

5. A method (1000) according to claim 4, wherein the autonomous pin pad unit (200) comprises a first part including at least a pin pad (210) to be attached to the exterior side of the parcel locker (110) and a second part attached to the interior side of the parcel locker (110), wherein the first part and the second part are at least electronically connected through said at least one aperture.

6. A parcel locker (110) for distribution of items, the parcel locker (110) comprises
- a plurality of compartments (20) including compartment doors (22) with lock units for controlling access to the plurality of compartments (120),
- a short-range parcel communication unit (132),
- a parcel locker controller comprising at least one processor and at least one locker memory that includes program code, wherein the locker memory and the program code is configured to cause the processor to instruct one or more of the lock units to open as a function of a received electronic token via the short-range parcel communication unit (132);
- an autonomous pin pad unit (200) comprising
- a pin pad (210) for receiving a user pin code;
- a pin pad energy storage (220) for powering the pin pad unit (200);
- a pin pad communication unit (240) including a short-range pin pad communication unit (242) for communicating with the parcel locker (110), and a long-range pin pad communication unit (244) for communicating with a distribution server (300);
- a pin pad controller (230) comprising at least one pin pad processor and at least one pin pad memory including program code, one or more pin codes and one or more electronic tokens linked to the one or more pin codes, wherein the memory and the program code is configured to cause the processor to match a received user pin code with the one or more pin codes and cause the short-range pin pad communication unit (242) to send the linked electronic token to the short-range parcel communication unit (132) as a function of a positive match.

7. A parcel locker (110) according to claim 6, wherein the memory and the program code is further configured to cause the long-range pin pad communication unit (244) to communicate with a distribution server (3000) to update the one or more pin codes and the one or more electronic tokens as a function of a pre-set period or when receiving a non-matching user pin code.

8. A parcel locker (110) according to claim 6 or 7, wherein the pin pad unit (200) comprises
- a first part including at least the pin pad (210) to be attached to an exterior side of one compartment door of the compartment doors (122); and
- a second part attached to an interior side of said compartment door (122), wherein said compartment door (122) comprises at least one aperture and the first part and the second part of the pin pad unit (200) being at least electronically connected through the at least one aperture.

9. A parcel locker (110) according to claim 8, wherein the short-range pin pad communication unit (242) comprises a short-range antenna (243) and the long-range pin pad communication unit (244) comprises a long-range antenna (245), wherein the short-range antenna (243) and the long-range antenna (245) are positioned on the exterior side of the one compartment door of the compartment doors (122).

10. A service point (100) for distribution of items, wherein the service point (100) comprises
- one or more parcel lockers (110B, 110C...) at least controllable via short-range communication, wherein the one or more parcel lockers (110) comprises a plurality of compartments (120) including compartment doors (122) with lock units for controlling access to the plurality of compartments (122), a parcel control unit (130), and a short-range parcel communication unit (132) and
- a parcel locker (110A) with an autonomous pin pad unit (200) according to any one of claims 6 to 9, wherein the one or more pin codes and the one or more electronic tokens include pin codes and electronic tokens to be sent to at least one of the one or more parcel lockers (110) as a function of received user pin codes via short-range wireless communication.

11. A method (2000) for opening a compartment door of a compartment (122) using a pin pad (210), the parcel locker (110) comprises a plurality of compartments (120) including compartment doors (122) with lock units for controlling access to the plurality of compartments (122), a parcel control unit (130) including a short-range parcel communication unit (132), and an autonomous pin pad unit (200) comprising a pin pad (210), a pin pad energy storage (220), a pin pad controller (230), and a pin pad communication unit (240) including a short-range pin pad communication unit (242) for communicating with the parcel locker (210), and a long-range pin pad communication unit (242) for communicating with a distribution server (300), wherein the autonomous pin pad unit (242) performs steps of;
- receiving (2100) a user pin code;
- matching (2200) the received user pin code with one or more pin codes stored on the autonomous pin pad unit (200);
- transmitting (2300) an electronic token to the short-range parcel communication unit (132) as a function of a matching pin codes, wherein the electronic token will cause the parcel locker (110) to unlock a compartment door (122);
- receiving (2400) an electronic synchronisation token from the short-range parcel communication unit (132).

12. A method (2000) according to claim 11, wherein the parcel locker (110) is according to any one of claims 6 to 9 or the parcel locker (110) is part of a service point (100) according to claim 10.

13. A method (2000) according to any one of claim 11 or 12, wherein the autonomous pin pad unit (200) performs the following;
- transmitting (2300) the user pin code to the distribution server (300) as of a non-matching user pin code,
- receiving (2400) an electronic token as a function of the user pin code matching a pin code at the distribution server (300),
- transmitting (2300) the electronic token to the short-range parcel communication unit (132) wherein the electronic token will cause the parcel locker (110) to unlock the compartment door.

14. A method (2000) according to any one of claims 11 to 13, wherein the autonomous pin pad unit (200) performs a step of hibernating (2500) between steps of receiving (2400) a user pin code.

15. A method (2000) according to any one of claims 11 to 14, wherein the method (2000) comprises steps of
- transmitting (2300) the electronic synchronization token to the distribution server (300);
- receiving (2400) an electronic acknowledgment token from the distribution server (300).

16. A kit for forming a service point, the kit comprising
- one or more parcel lockers (110) for distribution of items, the one or more parcel lockers (110) comprises
- a plurality of compartments (20) including compartment doors (22) with lock units for controlling access to the plurality of compartments (120),
- a short-range parcel communication unit (132),
- a parcel locker controller comprising at least one processor and at least one locker memory that includes program code, wherein the memory and the program code is configured to cause the processor to instruct one or more of the lock units to open as a function of a received electronic token via the short-range parcel communication unit (132);
- an autonomous pin pad unit (200) comprising
- a pin pad (210) for receiving a user pin code;
- a pin pad energy storage (220) for powering the pin pad unit (200);
- a pin pad communication unit (240) including a short-range pin pad communication unit (242) for communicating with the parcel locker (110), and a long-range pin pad communication unit (244) for communicating with a distribution server (300);
- a pin pad controller (230) comprising at least one pin pad processor and at least one pin pad memory including program code, one or more pin codes and one or more electronic tokens linked to the one or more pin codes, wherein the memory and the program code is configured to cause the processor to match a received user pin code with the one or more pin codes and cause the short-range pin pad communication unit (242) to send the linked electronic token to the short-range parcel communication unit (132) as a function of a positive match.
